Europäisches Patentamt

European Patent Office

Office européen des brevets

(19)

(11) Veröffentlichungsnummer: **0 018 604**
**B1**

(12) **EUROPÄISCHE PATENTSCHRIFT**

(45) Veröffentlichungstag der Patentschrift:
**18.05.83**

(51) Int. Cl.³: **A 23 C 20/00**, A 23 C 9/15

(21) Anmeldenummer: **80102227.8**

(22) Anmeldetag: **25.04.80**

(54) **Verfahren zur Herstellung eines haltbaren Lebensmittelproduktes.**

(30) Priorität: **27.04.79 DE 2917086**

(43) Veröffentlichungstag der Anmeldung:
**12.11.80 Patentblatt 80/23**

(45) Bekanntmachung des Hinweises auf die Patenterteilung:
**18.05.83 Patentblatt 83/20**

(84) Benannte Vertragsstaaten:
**AT BE CH DE FR GB IT LI LU NL SE**

(56) Entgegenhaltungen:
**AU-B-459 972**
**DE-A-2 432 148**
**FR-A-859 518**
**FR-A-1 107 958**
**FR-A-2 068 674**
**FR-A-2 381 474**
**US-A-2 224 720**
**US-A-3 310 406**

(73) Patentinhaber: **Benckiser-Knapsack GmbH, Dr. Albert-Reimann-Strasse 2, D-6802 Ladenburg (DE)**

(72) Erfinder: **Merkenich, Karl, Dr. Dipl.-Chem., Gunterstrasse 7, D-6149 Rimbach (DE)**
Erfinder: **Koch, Wilhelm, Dr. Dipl.-Chem., Im Unteren Rech 12, D-6802 Ladenburg (DE)**
Erfinder: **Glandorf, Käte, Feldbergstrasse 79, D-6800 Mannheim 1 (DE)**
Erfinder: **Uhlmann, Gerd, Dr. Dipl.-Chem., Friedrich-Ebert-Strasse 37, D-6800 Mannheim (DE)**
Erfinder: **Scheurer, Günther, Kirchgasse 61, D-6733 Hassloch (DE)**

(74) Vertreter: **Patentanwälte Zellentin, Zweibrückenstrasse 15, D-8000 München 2 (DE)**

### Verfahren zur Herstellung eines haltbaren Lebensmittelproduktes

Gegenstand der vorliegenden Erfindung ist ein Verfahren zur Herstellung eines haltbaren Lebensmittelproduktes aus Milchbestandteilen unter Verwendung von Phosphaten.

Als Überschuss-Produkte fallen in der Milchwirtschaft zunehmend Magermilch-, Molkenpulver, Butter bzw. Butterfett oder Butteröl an, deren Verwendung oft Schwierigkeiten bereitet. So ist es Aufgabe der vorliegenden Erfindung, diese Überschuss-Produkte in eine haltbare und zum Verzehr geeignete Form überzuführen.

Die Herstellung von Nahrungsmitteln auf Basis trockener Milchbestandteile ohne Verwendung von Mikroorganismen ist seit längerer Zeit bekannt. Als Ausgangsstoffe kommen hierfür Milchfett, Casein, Caseinat, Magermilchpulver, Molkenprotein, Molkenpulver, pflanzliche Fette, Bindemittel, Emulgatoren und Schmelzsalze in Frage.

Bisher hat man versucht, Nahrungsmittel aus der angegebenen Palette von Rohstoffen herzustellen, indem man

1. unter Verwendung von grossen Milchfettanteilen eine sehr hohe Fettstufe einstellt und damit fettreiche Streichmassen erhält, die eine streichrahmartige Konsistenz aufweisen,

2. neben den Schmelzsalzen noch Emulgatoren und spezielle Bindemittel,

3. Pflanzenfette, die bei rekombinierten Produkten leichter emulgierbar sind als Milchfette und

4. einen extrem hohen Casein- oder Caseinatanteil in der Trockenmasse einsetzt.

Diese Produkte ergeben zumeist fettige Brotaufstriche, ein Produkt gemäss 4 wird als Schmelzkäseersatz deklariert.

So wird z.B. in der DE-A-2 351 035 ein süsser schnittfester Brotbelag beschrieben, der als wesentliche Bestandteile etwa 5 bis 30 Gew.-% Triglyceride, etwa 5 bis 25 Gew.-% Natriumcaseinat, bis zu etwa 3 Gew.-% $Na_3HP_2O_7$, bis zu etwa 2 Gew.-% Mono- und Diglyceride, etwa 10 bis 40 Gew.-% Zuckerarten und bis zu 50 Gew.-% Wasser bzw. wässrige Flüssigkeiten enthält. Zur Herstellung eines solchen Brotbelages werden die Triglyceride und Emulgatoren bei etwa 50 bis 70 °C zusammengeschmolzen, mit der entsprechenden Menge Wasser emulgiert und anschliessend mit den übrigen Feststoffen vermischt, worauf das so erhaltene Gemisch unter Rühren und Erwärmen auf etwa 60 bis 80 °C in eine homogene Masse übergeführt und zum Abkühlen in eine Form gegeben wird.

In Weiterentwicklung des Brotbelags gemäss DE-A-2 351 035 ist in der DE-A-2 432 148 ein süsser schnittfester Brotbelag beschrieben, der anstelle von $Na_3HP_2O_7$ Gemische von Natriummono- und Polyphosphaten bzw. ein langkettiges Natriumpolyphosphat (Grahamsalz) bei einem unveränderten Anteil von Triglyceriden, natürlichen Fettsäuren und Emulgatoren enthält. Die DE-A-2 432 148 enthält keinen Hinweis auf die Möglichkeit einer Verwendung des unlöslichen Maddrell-Salzes oder Angaben, dass es möglich wäre, das Grundrezept zu verändern. Das beschriebene Produkt ist ausnahmslos als ein Produkt süsser Geschmacksrichtung und von schnittfester Konsistenz gekennzeichnet.

Des weiteren wird in der DE-A-2 808 303 ein Käseaustausch-Lebensmittelprodukt und ein Verfahren zu seiner Herstellung beschrieben, wobei ein Produkt erhalten wird, das 25 bis 65 Gew.-% Labcasein, 7 bis 55 Gew.-% eines hydrierten Pflanzenöls, 2 bis 12 Gew.-% eines Solvatisierungsmittels auf der Basis Citrat oder Phosphat und geeignete Geschmacksstoffe bzw. Gewürze enthält. Hergestellt wird ein solches Produkt durch Vermischen der Bestandteile und anschliessendem Erhitzen auf 66 bis 149 °C.

Bei den bisher bekannten Verfahren geht man von einer Mischung aus, die entweder einen verhältnismässig grossen Anteil an Labcasein enthält, oder man verwendet Pflanzenfett statt Milchfett und setzt zusätzlich Emulgatoren auf Basis von Mono- oder Diglyceriden sowie Dickungsmittel ein, um ein homogenes Produkt der gewünschten Konsistenz zu erzielen.

Überraschenderweise ist es nun gelungen ohne die erwähnten Zusätze ein Produkt herzustellen, dessen Konsistenz von schnittfest über streichfähig bis löffelfähig reicht, wenn man 20 bis 40 Gew.-%, vorzugsweise 25 bis 30 Gew.-% Magermilchpulver, 0 bis 45 Gew.-%, vorzugsweise 20 bis 30 Gew.-% Butterschmalz und 30 bis 80 Gew.-% Wasser mit, bezogen auf Trockenmasse, 2 bis 6% eines Salzgemisches, das Natriummonophosphat, Natriumpolyphosphat mit 70% $P_2O_5$ und Maddrell-Salz, das auf einen pH-Wert von 2,9 eingestellt ist, im Verhältnis von etwa 3:4:2 enthält, in einer für die Schmelzkäseherstellung üblichen Vorrichtung auf Temperaturen von 80 bis 120 °C, vorzugsweise 90 bis 110 °C innerhalb von 2 bis 20 Minuten erhitzt.

Als fettfreie Trockenmasse enthält die Grundmischung reines Magermilchpulver, so dass der gesamte Calcium- und Mineralstoffgehalt der frischen Milch in dem Produkt erhalten bleibt.

Das Magermilchpulver kann anteilig bis zu 20% durch Molkenpulver ersetzt werden, wobei im allgemeinen ein Zusatz von 6 bis 10% die besten Ergebnisse gebracht hat.

Falls es gewünscht wird, kann auch ein Anteil bis zu etwa 10% des Magermilchpulvers durch Casein oder Caseinat ersetzt werden.

Soweit fetthaltige Produkte hergestellt werden, enthalten diese lediglich Milchfett. Bevorzugt eingesetzt werden hierzu 20 bis 30% Butterschmalz; es ist jedoch auch möglich, Produkte herzustellen, bei denen weniger oder mehr Butterschmalz eingesetzt wird. Einen Anteil von 45 Gew.-% sollte man jedoch nicht überschreiten.

Je nach Wunsch und Verwendungszweck kann durch eine Veränderung der Trockenmasse bzw. des Fettgehaltes jede beliebige Konsistenz von schnittfest bis löffelfähig erreicht werden.

Im Gegensatz zu Pflanzenfetten, die in anderen Produkten auf Milchproteinbasis verwendet werden, lässt sich Butterfett unter Verwendung von rehydratisiertem Casein erheblich schwieriger emulgieren, dadurch besteht bei längerer Lagerung die Gefahr des Ausölens, deshalb sind zusätzlich Emulgatoren und Stabilisatoren erforderlich. Mit der erfindungsgemäss eingesetzten Phosphatmischung gelingt es jedoch auch in Anwesenheit von höheren Mengen an Butterfett eine hervorragende stabile Emulsion ohne weitere Zusatzstoffe zu erzielen.

Die Haltbarkeit der nach dem vorliegenden Verfahren hergestellten Nahrungsmittel ist sehr gut. Ohne dass sich die Qualität ändert, beträgt ihre Mindesthaltbarkeit bei 37 °C 3 Monate, bei Raumtemperatur hingegen 6 Monate.

Als süsse und/oder fruchtige Geschmacksstoffe können insbesondere Zucker, Früchte, Fruchtessenzen und Fruchtaromen, Marmelade, Honig, Schokolade sowie Vanille, Mocca usw. allein oder in Mischung in Mengen bis zu 10 Gew.-% zugesetzt werden.

Bevorzugt man jedoch, ein Produkt herzustellen, dessen Geschmack würzig sein soll, so können die verschiedensten Gewürze wie Pfeffer, Paprika und Zusätze wie Tomaten, Röstzwiebeln, Oliven und Käsearoma verwendet werden. Die Zugabemenge an solchen Geschmacksstoffen richtet sich nach der Intensität des Geschmackes der zugesetzten Komponente.

Die nach den nachstehenden Beispielen erhaltenen Produkte weisen ohne Zusatz von Geschmacksstoffen bereits einen milden, reinen, frischen und leicht süsslichen Grundgeschmack auf, der aber nur durch die Auswahl der speziellen Phosphatmischung erreicht wird.

Wie Versuche gezeigt haben, erhält man bei der Verwendung von Di-, Tri- und Tetrapolyphosphaten Produkte, die einen bitteren Nachgeschmack aufweisen. Man kann zwar auch übliche Schmelzsalze einsetzen, jedoch erhält man Produkte, die im Geschmack, Konsistenz und Haltbarkeit nicht so gut sind wie Produkte, die mit dem erfindungsgemäss eingesetzten Phosphatgemisch hergestellt werden.

Nachstehend wird die Erfindung anhand von Ausführungsbeispielen, die verschiedene Mischungen betreffen, näher erläutert.

In den Beispielen wurde folgende Versuchsdurchführung gewählt:

a) Die zu erhitzende Mischung wird in einer Pfannenschmelzmaschine bei einer Rührgeschwindigkeit von 120 UpM mit direktem Dampf innerhalb 15 Minuten auf 95 °C gebracht, bei 300 atü ($\approx$ 294 bar) homogenisiert und abgefüllt.

b) In einem hochtorigen Kutter wird die zu erhitzende Mischung bei einer Rührgeschwindigkeit von 1,500 UpM mit direktem Dampf innerhalb von 6 Minuten auf 95 °C gebracht, 3 Minuten bei 3,000 UpM nachgerührt und anschliessend abgefüllt.

Als Aufschlussmittel wird eine Phosphatmischung, die aus 33 Teilen $NaH_2PO_4$, 45 Teilen Natriumpolyphosphat mit 70% $P_2O_5$ und 22 Teilen Maddrell-Salz, das auf einen pH-Wert von 2,9 eingestellt ist, verwendet. In sämtlichen Beispielen wurde nach der Methode a) und b) erhitzt.

Beispiel 1

| 0% Fett i.T. | 600 g Magermilchpulver |
| 41% TM | 24 g Phosphat-Mischung der genannten Zusammensetzung |
| | 900 g Wasser (inkl. Kondensat) |

Das erhaltene Produkt ist glatt, leicht durchscheinend und gut streichfähig, zeigt jedoch nicht die gleiche cremige Struktur wie die mittel- bis hochfetten Produkte.

Beispiel 2

| 30% Fett i.T. | 400 g Magermilchpulver |
| 46% TM | 220 g Butterschmalz |
| | 25 g Phosphat-Mischung der genannten Zusammensetzung |
| | 750 g Wasser (inkl. Kondensat) |

Das erhaltene Produkt ist gut streichfähig.

Beispiel 3

| 45% Fett i.T. | 300 g Magermilchpulver |
| 55% TM | 300 g Butterschmalz |
| | 24 g Phosphat-Mischung der genannten Zusammensetzung |
| | 500 g Wasser (inkl. Kondensat) |

Das erhaltene Produkt zeigt eine gut streichfähige, jedoch leicht elastische Konsistenz.

Beispiel 4

| 45% Fett i.T. | 240 g Magermilchpulver |
| 55% TM | 60 g Molkenpulver |
| | 300 g Butterschmalz |
| | 24 g Phosphat-Mischung der genannten Zusammensetzung |
| | 500 g Wasser (inkl. Kondensat) |

Das erhaltene Produkt ist cremiger als das Produkt nach Beispiel 3.

Beispiel 5

| 60% Fett i.T. | 200 g Magermilchpulver |
| 56% TM | 400 g Butterschmalz |
| | 24 g Phosphat-Mischung der genannten Zusammensetzung |
| | 490 g Wasser (inkl. Kondensat) |

Das erhaltene Produkt zeigt eine sehr cremige, weiche Konsistenz und ist gut streichfähig.

Beispiel 6

| 45% Fett i.T. | 300 g Casein oder Caseinat |
| 49% TM | 300 g Magermilchpulver |
| | 600 g Butterschmalz |
| | 48 g Phosphat-Mischung der genannten Zusammensetzung |
| | 1,275 g Wasser (inkl. Kondensat) |

Das erhaltene Produkt zeigt eine elastische Konsistenz, ist jedoch noch streichfähig.

Beispiel 7
45% Fett i.T.     540 g Magermilchpulver
20% TM     60 g Molkenpulver

         600 g Butterschmalz
           48 g Phosphat-Mischung der
               genannten Zusammen-
               setzung
     5,000 g Wasser (inkl. Kondensat)

Das erhaltene Produkt enthält 3,7% Casein. Seine Konsistenz ist löffelfähig, es zeigt einen hohen Glanz.

Bei dieser geringen Trockenmasse kann die Vollmundigkeit und Geschmeidigkeit des Produktes durch einen Zusatz von 0,1 bis 0,8% Carboxymethylcellulose oder Methylcellulose erhöht werden. Im allgemeinen genügt ein Zusatz von 0,3 bis 0,5%.

Beispiel 8
45% Fett i.T.     540 g Magermilchpulver
63% TM     60 g Molkenpulver
         600 g Butterschmalz
           48 g Phosphat-Mischung der
               genannten Zusammen-
               setzung
         700 g Wasser (inkl. Kondensat)
Das erhaltene Produkt ist schnittfähig.

## Patentansprüche

1. Verfahren zur Herstellung eines haltbaren Lebensmittelproduktes aus Milchbestandteilen unter Verwendung von Phosphaten, dadurch gekennzeichnet, dass man 20 bis 40 Gew.-%, vorzugsweise 25 bis 30 Gew.-%, Magermilchpulver, 0 bis 45 Gew.-%, vorzugsweise 20 bis 30 Gew.-%, Butterschmalz und 30 bis 80 Gew.-% Wasser mit, bezogen auf die Trockenmasse, 2 bis 6% eines Salzgemisches, das Mononanatriumphosphat, Natriumpolyphosphat mit 70% $P_2O_5$ und Maddrell-Salz mit einem pH-Wert von 2,9 im Verhältnis von etwa 3:4:2 enthält, in einer für die Schmelzkäseherstellung üblichen Vorrichtung auf Temperaturen von 80 bis 120 °C, vorzugsweise 90 bis 110 °C, innerhalb von 2 bis 20 Minuten erhitzt.

2. Verfahren nach Anspruch 1, dadurch gekennzeichnet, dass man das Magermilchpulver anteilig durch Molkenpulver in Mengen von bis zu 20 Gew.-%, vorzugsweise 6 bis 10 Gew.-%, ersetzt.

3. Verfahren nach Anspruch 1 oder 2, dadurch gekennzeichnet, dass man fruchtige oder süsse Geschmacksstoffe bzw. deren Mischungen in Mengen bis zu 10% zusetzt.

4. Verfahren nach Anspruch 1 oder 2, dadurch gekennzeichnet, dass man würzige Geschmacksstoffe zusetzt.

## Claims

1. A process for preparing a durable food product from milk constituents with the use of phosphates, characterized in that a mixture of from 20 to 40% by weight, preferably from 25 to 30% by weight, of skimmed milk powder, from 0 to 45% by weight, preferably from 20 to 30% by weight, of clarified butter and from 30 to 80% by weight of water together with, relative to the dry mass, from 2 to 6% by weight of a salt mixture, which contains monosodium phosphate, sodium polyphosphate containing 70% of $P_2O_5$ and Maddrell's Salt having a pH of 2.9 in a ratio of approximately 3:4:2, is heated to a temperature of from 80 to 120 °C, preferably from 90 to 110 °C, for a period of 2 to 20 minutes in a conventional apparatus for the production of processed cheese.

2. A process according to Claim 1, characterized in that the skimmed milk powder is replaced proportionately by whey powder in an amount of up to 20% by weight, preferably from 6 to 10% by weight.

3. A process according to Claim 1 or 2, characterized in that fruity or sweet flavourings or mixtures thereof in quantities of up to 10% are added to the mixture.

4. A process according to Claim 1 or 2, characterized in that spicy flavourings are added to the mixture.

## Revendications

1. Procédé de préparation, à partir des constituants du lait et en utilisant des phosphates, d'un produit alimentaire pouvant se conserver, procédé caractérisé en ce qu'on chauffe en l'espace de 2 à 20 minutes à des températures de 80 à 120 °C, de préférence 90 à 110 °C, dans un appareillage usuel pour la préparation du fromage fondu, 20 à 40% en poids, de préférence 25 à 30% en poids, de poudre de lait écrémé, 0 à 45% en poids, de préférence 20 à 30% en poids, de beurre fondu et 30 à 80% en poids d'eau avec, par rapport à la matière sèche, 2 à 6% d'un mélange de sels qui contient, selon un rapport d'environ 3:4:2, du phosphate monosodique, du polyphosphate de sodium comportant 70% de $P_2O_5$ et du sel de Maddrell, présentant un pH de 2,9.

2. Procédé selon la revendication 1, caractérisé en ce qu'on remplace une partie de la poudre de lait écrémé par de la poudre de petit lait en des quantités allant jusqu'à 20% en poids, avantageusement en des quantités de 6 à 10% en poids.

3. Procédé selon la revendication 1 ou 2, caractérisé en ce qu'on ajoute des arômes de fruits ou des arômes sucrés ou leurs mélanges, en des quantités pouvant aller jusqu'à 10%.

4. Procédé selon la revendication 1 ou 2, caractérisé en ce qu'on ajoute des arômes épicés.